# EUROPEAN PATENT SPECIFICATION

(11) **EP 2 380 811 B1**
(45) Date of publication and mention of the grant of the patent: **18.07.2012**
(21) Application number: 10382094.0
(22) Date of filing: 23.04.2010
(51) Int. Cl.: B65B 9/04, B65B 47/02, B65B 59/00, B29C 31/00, B29C 51/26

(54) **Packaging machine**
Verpackungsmaschine
Machine de conditionnement

(43) Date of publication of application: 26.10.2011
(73) Proprietor: Multivac Sepp Haggenmüller GmbH & Co. KG, 87787 Wolfertschwenden (DE)
(72) Inventor: Monente Plösser, Francisco, 08396 Sant Cebria de Vallalta (ES)
(74) Representative: Grünecker, Kinkeldey, Stockmair & Schwanhäusser

(56) References cited:
- EP-A1- 1 048 573
- DE-A1- 10 022 269
- DE-C1- 3 605 864

## Description

### PURPOSE OF THE INVENTION

The purpose of this invention is a packaging machine which will enable the interchange of moulds or tools used in the formation of containers designed hold different products.

Due to its special configuration, the packaging machine is provided with a mould or tool exchanger which can store several of these, irrespective of their dimensions.

In addition, the packaging machine exchanger removes from and supplies the tools or moulds to the work station in a continuous manner.

### BACKGROUND TO THE INVENTION

Packaging machines are known in the state of the art, having at least one thermoforming station and a sealing station in order to form containers, the interior of which serve to hold different products.

One such earlier invention is found in European patent with publication number EP1234765 for rapid change device for a deep thermoforming machine.

Said patent consists of a thermoforming station which permits formation on a first sheet of different cavities for holding products, and a sealing station which permits formation of the container closures by means of an additional sheet.

These thermoforming and sealing stations provide tools or moulds which are situated above or below the sheet to be formed into a container or the sheet to be used for sealing the same.

In addition, said packaging machine is also provided with transfer means which permit the previous tools or moulds to be displaced from the sealing station and the thermoforming station in order to be replaced by others in the event that the requirements of the product to be packaged have changed.

These means of transfer means are arranged at the same height as the tools or moulds used in each of the work stations in such a way that they are replaced in stores adjacent to said means of transfer means and therefore said work stations.

Nevertheless, the earlier machine has the disadvantage that in cases where extremely tall moulds are used, these adjacent stores are only adequate to hold a limited number of moulds, 2 or 3 at the most, when there are occasions in which the same machine is able to work with different types of moulds in order to adapt to different types of products.

Furthermore, the means of transfer of the aforementioned machine requires at least two movements to be carried out, one which moves to the store carrying the tool or mould to be replaced, which is generally horizontal, followed by a vertical movement to house the tool or mould to be substituted in the receptacle designed for this purpose. To these movements should be added the antagonistic movements of collection and transport to the work station of the new tool or mould.

All these disadvantages restrict the machine's production capacity in terms of the number of tools or moulds which can be interchanged, as there are considerably long periods of dead time, disadvantages which are overcome with the invention which is described below.

Reference DE 36 05 864 C1 describes a packaging machine with a deep draw station, a filling station, a cover station, and a cutting station, which are all positioned in line. The deep draw station comprises a rotatable tool that comprises several moulds. Depending on the form to be deep drawn, the tool is rotated in such a position that the corresponding mold is active to the process.

Reference DE 100 22 269 A1 refers to an apparatus for thermoforming processes. The apparatus comprises a rotatable table with a set of lower tools and, further, a rotatable tool device that provides upper tools.

Reference EP 1 048 573 A1 describes a support arrangement for tool devices. Thereby, a set of tools can be supported by a rotatable tool device supply, which is located along the process. Depending on the process, the required tool can be rotated in a work position.

In view of the above described technical disadvantages and the cited prior art, it is the technical object of the present invention to provide a packaging machine with such means that allow an economic and efficient supply and storage of tools or moulds.

This object can be solved with the technical features of claim 1. Preferred embodiments of the invention are provided with the technical features of the dependent claims.

### DESCRIPTION OF THE INVENTION

This invention refers to a packaging machine which permits the moulds or tools used in forming the containers which serve to hold different products to be interchanged.

The packaging machine is provided with at least one thermoforming station and a sealing station which permits formation of the space required to hold the product in a first sheet and the sealing of the container formed by a second sheet respectively.

At least one of the previous work stations is provided with a tool or mould exchanger arranged either above or below the area on which the sheet is arranged, for shaping either the base of the container or its lid or cap.

This exchanger is provided with a group of tools or moulds arranged at any given time along the continuous transfer means which are designed to position the tool or mould needed in each operation to be carried out on the corresponding work station.

In this way, the tools or moulds are integrated in the continuous transfer means in such a way that they do not need to be collected or returned to the store adjacent to the work stations for storage purposes, as the tool or mould required for each operation is arranged on the continuous transfer means at all times.

### DESCRIPTION OF THE DRAWINGS

This descriptive report is accompanied by a set of drawings which illustrate a preferred embodiment of the invention but which is in no way restrictive.
Figure 1 shows a perspective view of the packaging machine which is the object of this invention.
Figure 2 shows an upright view of the packaging machine which is the object of this invention.
Figure 3 shows a diagram of the arrangement of the tools or moulds in the exchanger.

### PREFERRED EMBODIMENT OF THE INVENTION

In the light of the foregoing description, this invention refers to a packaging machine which permits mould or tools used in the forming of containers for different products to be interchanged.

In this example of a preferred embodiment, the packaging machine is used to package foods and it is provided with a feeder of the lower film (1) or sheet of the container which permits, through thermoforming, formation of the cavity or cavities which will house the products.

The lower film (1) or sheet of the container is supplied through a coil (1.1) which transports the film (1) or sheet by means of rollers (2.1) and dragging means (not shown) controlled through a touch screen (2.2), to a lower guide (2.3) situated between two semi-moulds (3.1, 3.2) of a thermoforming station (4). All these elements are integrated in the frame (2) of the packaging machine.

This thermoforming station (4) comprises a lower demi-mould (3.1) integrated in an exchanger (5) which is provided with a set of tools or moulds (3) arranged along continuous transfer means (5.1) which are designed to position the demi-mould (3.1) required at any time in the thermoforming station (4).

This exchanger (5) is arranged under the lower film (1) or sheet with an upper demi-mould (3.2) arranged above the film (1) which cooperates with the lower demi-mould (3.1) for thermoforming of the container.

An exchanger with continuous transfer means in which the upper demi-moulds (3.2) are integrated has not been represented in order to simplify the figures, however, the same lower arrangement could be applied to the upper part of the packaging machine with respect to the film (1).

According to the invention, the continuous transfer means (5.1) of the exchanger (s) (5) describe a closed trajectory, preferably rectangular.

Furthermore, the continuous transfer means (5.1) are formed by respective toothed belts or symmetrical chains with respect to a vertical plane.

The toothed belts or chains engage in each of their vertices with pulleys (2.4) which are activated by means of external activation means (not shown). The pulleys (2.4) rotate round a bolt (2.5) which passes through its centre and is anchored to the machine frame (2).

The moulds (3) are articulated in toothed belts or pulleys by means of lateral straps (5.2) so that they present along the entire movement, due to the transfer means (5.1) the arrangement that they will occupy in the corresponding station (4).

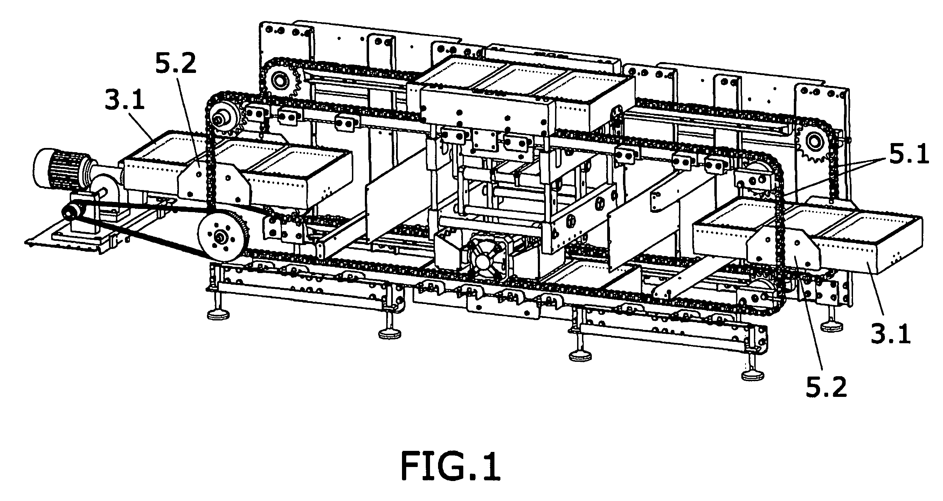

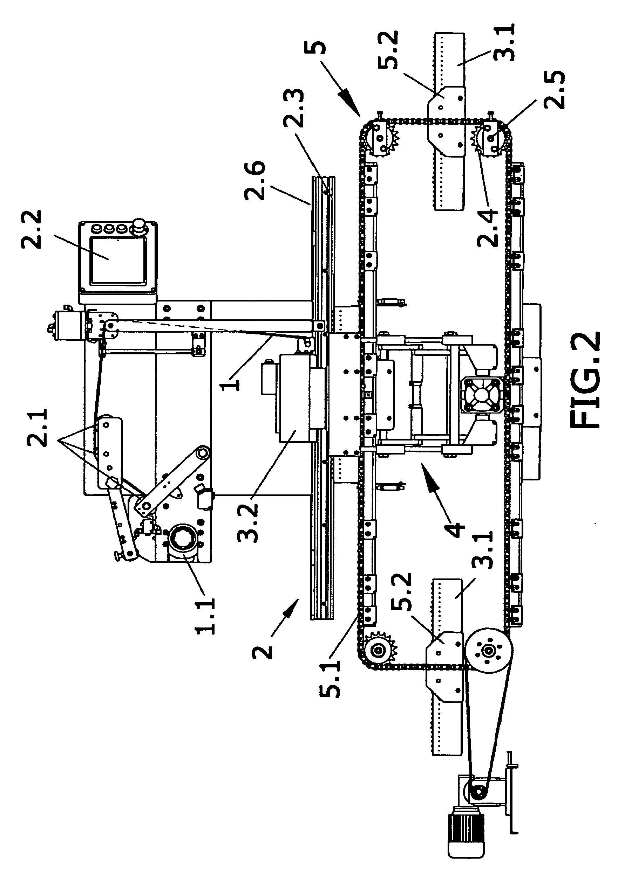

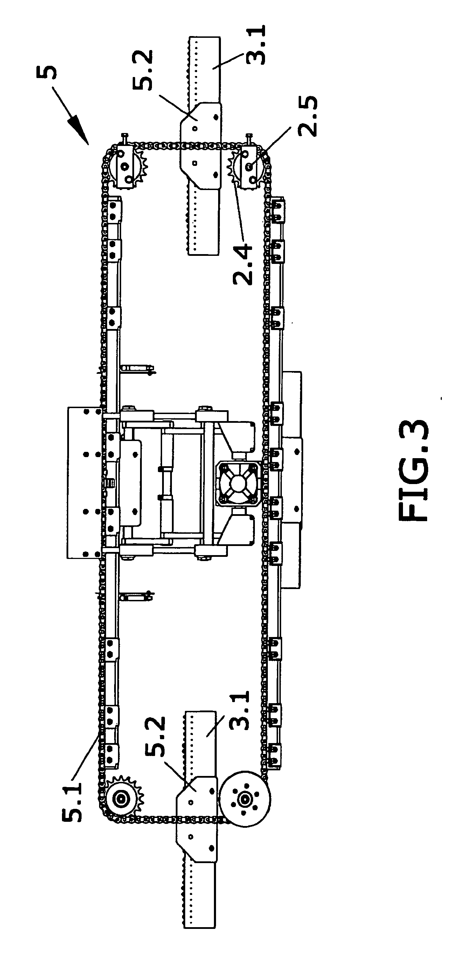

Figures 1 and 2 show an arrangement of demi-moulds, while figure 3 shows a configuration with double demi-moulds in various sizes.

The packaging machine is provided with a sealing station (not shown) which permits welding of an upper film or sheet which moves along an upper guide (2.6) to the lower film or sheet (1) formed in the thermoforming station (4) and which fulfils the function of container lid or cap. This sealing station is not shown in the Figures, however, it may present a configuration similar to the thermoforming station, with continuous transfer means both in the upper and the lower part with respect to said upper film or sheet.

The essential nature of this invention is not altered by variations in materials, form, size or arrangement of the component elements which are described in a non-restrictive manner which is sufficient for an expert to proceed to its reproduction.

## Claims

1. Packaging machine which comprises at least one tool or mould (3) exchanger (5) arranged either above or below the zone on which the film or sheet (1) is arranged, which serves to shape either the base of a container or the cap or lid thereof, in one or various work stations (4), wherein at least one exchanger (5) is provided with a group of tools or moulds (3) arranged at any time along continuous transfer means (5.1) which are designed to position the tool or mould (3) required by each operation to be carried out at the corresponding work station (4),
**characterized in that**
the continuous transfer means (5.1) of the exchanger (5) describe a closed trajectory with a group of vertices.

2. Packaging machine according to claim 1, **characterized in that** the continuous transfer means (5.1) are formed by respective toothed belts or symmetrical chains with respect to a vertical plane.

3. Packaging machine according to claim 2, **characterized in that** the toothed belts or chains engage in each of its vertices with pulleys (2.4) which are activated by external activation means.

4. Packaging machine according to claim 2, **characterized in that** the moulds (3) are articulated in toothed belts or pulleys by means of lateral straps (5.2)in such a way that they present along the entire movement, due the transfer means (5.1), the arrangement they will occupy in the corresponding station (4).

5. Packaging machine according to one of the previous claims, **characterized in that** the packaging machine is provided with a lower film (1) or sheet of the container to be formed, which is supplied through a coil (1.1) which, by means of rollers (2.1) and dragging means is carried towards a lower guide (2.3) situated between two demi-moulds (3.1, 3.2) of a thermoforming station (4).

6. Packaging machine according to claim 5, **characterized in that** this thermoforming station (4) comprises a lower demi-mould (3.1) which is integrated in an exchanger (5) arranged below the lower film (1) or sheet and which is provided with a group of tools or moulds (3.1) arranged along continuous transfer means (5.1) which are designed to position the demi-mould (3.1) required at any given time in the thermoforming station (4) with an upper demi-mould (3.2) arranged above the film (1) which cooperates with the lower demi-mould (3.1) in order to thermoform the container.

7. Packaging machine according to claim 6, **characterized in that** it is provided with a sealing station which enables an upper film or sheet to be welded which is moved by an upper guide (2.6) to the lower film (1) or sheet formed in the thermoforming station (4) and which fulfils the functions of cap or lid of the container.

8. Packaging machine according to claim 7, **characterized in that** the sealing station is provided with a configuration similar to the thermoforming station (4), with means of continuous transfer means (5.1) at least in the lower part with respect to said upper film or sheet.

## Patentansprüche

1. Verpackungsmaschine, die zumindest einen Werkzeug- oder Formwerkzeugaustauscher (5) umfasst, der entweder über oder unter einem Bereich angeordnet ist, in dem eine Folie oder ein Folienblatt (1) angeordnet ist, die dazu dient, entweder einen Boden eines Containers oder eine Abdeckung oder einen Deckel des Containers in einer oder verschiedenen Arbeitsstationen (4) zu formen, wobei der zumindest eine Austauscher (5) eine Gruppe von Werkzeugen oder Formwerkzeugen (3) umfasst, die zu jeder Zeit entlang durchgehender Fördermittel (5.1) angeordnet sind, welche dazu ausgebildet sind, das jeweilige Werkzeug oder Formwerkzeug (3) an der entsprechenden Arbeitsstation (4) des auszuführenden Arbeitsschrittes zu positionieren,
**dadurch gekennzeichnet,**
**dass** die durchgehenden Fördermittel (5.1) des Austauschers (5) eine geschlossene Bewegungsbahn mit einer Gruppe von Eckpunkten bilden.

2. Verpackungsmaschine nach Anspruch 1,
**dadurch gekennzeichnet,**
**dass** die durchgehenden Fördermittel (5.1) durch Zahnriemen oder durch symmetrische Ketten hinsichtlich einer vertikalen Ebene geformt sind.

3. Verpackungsmaschine nach Anspruch 2,
**dadurch gekennzeichnet,**
**dass** die Zahnriemen oder die Ketten an ihren Eckpunkten jeweils mit Antriebsscheiben (2.4) in Eingriff sind, die durch externe Antriebsmittel angetrieben werden.

4. Verpackungsmaschine nach Anspruch 2,
**dadurch gekennzeichnet,**
**dass** die Formwerkzeuge (3) durch laterale Haltebügel (5.2) an den Zahnriemen oder den Ketten derart angeordnet sind, dass sie dort während der gesamten Bewegung angeordnet bleiben, und durch die Fördermittel (5.1) in der entsprechenden Arbeitsstation (4) angeordnet werden.

5. Verpackungsmaschine gemäß einem der vorigen Ansprüche,
**dadurch gekennzeichnet,**
**dass** der Verpackungsmaschine eine untere Folie (1) oder ein Folienblatt des zu formenden Containers zuführbar ist, welche von einer Folienrolle (1.1) bereitgestellt wird und durch Rollen (2.1) und Abwickelmittel zu einer unteren Führung (2.3) geführt wird, die zwischen zwei Formwerkzeugteilen (3.1, 3.2) einer Formstation (4) angeordnet ist.

6. Verpackungsmaschine nach Anspruch 5,
**dadurch gekennzeichnet,**
**dass** die Formstation (4) ein unteres Formwerkzeug (3.1) umfasst, welches im Austauscher (5) integriert ist, der unter der unteren Folie (1) oder dem Folienblatt angeordnet ist und über eine Gruppe von Werkzeugen oder Formwerkzeugen (3.1) verfügt, die entlang der durchgehenden Fördermittel (5.1) angeordnet sind, welche dazu ausgebildet sind, das Formwerkzeug (3.1) zu jeder Zeit in der Formstation (4) relativ zu einem oberen Formwerkzeug (3.2) zu positionieren, welches über der Folie (1) angeordnet ist und mit dem unteren Formwerkzeug (3.1) zusammenwirkt, um den Container zu formen.

7. Verpackungsmaschine nach Anspruch 6,
**dadurch gekennzeichnet,**
**dass** sie eine Siegelstation umfasst, die es ermöglicht, eine Oberfolie oder ein Oberfolienblatt zu versiegeln, die mittels einer oberen Führung (2.6) zu der unteren Folie (1) oder dem Folienblatt geführt wird, welche in der Formstation (4) geformt wird, und die die Funktion einer Abdeckung oder eines Deckels des Containers erfüllt.

8. Verpackungsmaschine nach Anspruch 7,
**dadurch gekennzeichnet,**
**dass** die Siegelstation eine ähnliche Konfiguration wie die Formstation (4) aufweist, umfassend durchgehende Fördermittel (5.1), die zumindest unterhalb relativ zu der oberen Folie oder dem Folienblatt angeordnet sind.

## Revendications

1. Machine d'emballage comprenant au moins un échangeur (5) d'outil ou de moule (3) agencé soit au-dessus, soit en dessous de la zone sur laquelle le film ou la feuille (1) est placé(e), qui sert à conformer soit la base d'un récipient, soit le capuchon ou le couvercle de celui-ci, dans une ou plusieurs stations de travail (4), dans laquelle au moins un échangeur (5) est pourvu d'un groupe d'outils ou de moules (3) agencés à un moment quelconque le long de moyens de transfert en continu (5.1) qui sont conçus pour positionner l'outil ou le moule (3) requis par chaque opération à mettre en oeuvre à la station de travail correspondante (4),
**caractérisée en ce que**
les moyens de transfert en continu (5.1) de l'échangeur (5) décrivent une trajectoire fermée avec un groupe de sommets.

2. Machine d'emballage selon la revendication 1, **caractérisée en ce que** les moyens de transfert en continu (5.1) sont formés par des courroies crantées ou des chaînes symétriques respectives par rapport à un plan vertical.

3. Machine d'emballage selon la revendication 2, **caractérisée en ce que** les courroies crantées ou les chaînes s'engagent à chacun de leurs sommets dans des poulies (2.4) qui sont actionnées par des moyens d'actionnement externes.

4. Machine d'emballage selon la revendication 2, **caractérisée en ce que** les moules (3) sont articulés dans des courroies crantées ou des poulies au moyen d'étriers latéraux (5.2) de telle manière qu'ils présentent sur l'entièreté du mouvement, du fait des moyens de transfert (5.1), l'agencement qu'ils occuperont dans la station correspondante (4).

5. Machine d'emballage selon l'une des revendications précédentes, **caractérisée en ce que** la machine d'emballage est pourvue d'un film (1) ou d'une feuille inférieur(e) du récipient à conformer, qui est alimenté(e) à travers une bobine (1.1) qui, au moyen de rouleaux (2.1) et de moyens d'entraînement, est transportée vers un guide inférieur (2.3) situé entre deux demi-moules (3.1, 3.2) d'une station de thermoformage (4).

6. Machine d'emballage selon la revendication 5, **caractérisée en ce que** cette station de thermoformage (4) comprend un demi-moule inférieur (3.1) qui est intégré dans un échangeur (5) agencé sous le film (1) ou la feuille inférieur(e) et qui est pourvu d'un groupe d'outils ou de moules (3.1) agencés le long de moyens de transfert en continu (5.1) qui sont conçus pour positionner à un moment quelconque le demi-moule (3.1) requis dans la station de thermoformage (4) avec un demi-moule supérieur (3.2) agencé au-dessus du film (1) qui interagit avec le demi-moule inférieur (3.1) de manière à thermoformer le récipient.

7. Machine d'emballage selon la revendication 6, **caractérisée en ce qu'**elle est pourvue d'une station de scellement qui permet de souder un film ou une feuille qui est déplacé(e) par un guide supérieur (2.6) vers le film (1) ou la feuille inférieur(e) formé(e) dans la station de thermoformage (4) et qui remplit les fonctions de capuchon ou de couvercle du récipient.

8. Machine d'emballage selon la revendication 7, **caractérisée en ce que** la station de scellement est pourvue d'une configuration similaire à celle de la station de thermoformage (4), avec des moyens de transfert en continu (5.1) au moins dans la partie inférieure par rapport audit film ou à ladite feuille supérieur(e).
